Europäisches Patentamt

European Patent Office

Office européen des brevets

(19)

(11) **EP 0 925 515 B1**

(12) **FASCICULE DE BREVET EUROPEEN**

(45) Date de publication et mention
de la délivrance du brevet:
**30.05.2001 Bulletin 2001/22**

(51) Int Cl.⁷: **G01S 5/14**, G01S 5/00

(21) Numéro de dépôt: **97938969.9**

(86) Numéro de dépôt international:
**PCT/FR97/01545**

(22) Date de dépôt: **02.09.1997**

(87) Numéro de publication internationale:
**WO 98/10308 (12.03.1998 Gazette 1998/10)**

(54) **PROCEDE D'AIDE A LA NAVIGATION D'UN MOBILE VERS UNE CIBLE EGALEMENT MOBILE**

NAVIGATIONSHILFEVERFAHREN FÜR EIN MOBILES OBJEKT ZU EINEM SICH EBENFALLS
BEWEGENDEN OBJEKT

METHOD OF AIR NAVIGATION ASSISTANCE FOR GUIDING A MOVING VEHICLE TOWARDS A
MOVING TARGET

(84) Etats contractants désignés:
**DE GB**

(30) Priorité: **03.09.1996 FR 9610718**

(43) Date de publication de la demande:
**30.06.1999 Bulletin 1999/26**

(73) Titulaire: **THALES AVIONICS S.A.**
**78141 Vélizy Villacoublay Cédex (FR)**

(72) Inventeur: **GUILLARD, Patrice,Thomson-CSF**
**S.C.P.I.**
**F-94117 Arcueil Cedex (FR)**

(74) Mandataire: **Guérin, Michel et al**
**Thomson-CSF Propriété Intellectuelle,**
**13, Avenue du Président Salvador Allende**
**94117 Arcueil Cédex (FR)**

(56) Documents cités:
**EP-A- 0 523 897         EP-A- 0 559 074**
**EP-A- 0 660 131         WO-A-95/17685**
**US-A- 5 430 656**

## Description

L'invention concerne l'assistance à la navigation ou au pilotage en vue de diriger un mobile vers une cible qui peut se déplacer ou plus généralement vers une cible dont on ne connaît pas a priori la position exacte. On appellera ci-après cette navigation ou ce pilotage "navigation relative" ; le mobile sera appelé "chasseur", l'objectif du chasseur étant la cible.

Les applications envisagées ici sont notamment les suivantes :

- appontage d'un hélicoptère ou d'un avion sur un navire, ou une plate-forme pétrolière,
- rendez-vous spatial,
- rendez-vous entre navires de surface ou sous-marins,
- poursuite d'un véhicule par un autre,
- ravitaillement en vol,
- mouvement de véhicules en formation en restant à distance déterminée d'un chef de file,
- mouvement de véhicules vers une balise en mer (pour des navires) ou au sol (pour des hélicoptères ou des véhicules terrestres) alors qu'on ne connaît pas a priori la position de la balise,
- mouvements vers des points dont les positions sont connues par rapport à une balise alors que la position de la balise elle-même n'est pas connue.

Les applications envisagées sont des applications dans lesquelles la précision de positionnement est un paramètre prépondérant.

Les systèmes proposés jusqu'à maintenant pour ces applications ne sont pas suffisamment précis ou demandent des puissances de calcul trop importantes pour permettre des applications en temps réel avec une précision suffisante. Pour le cas de l'appontage d'avions sur un porte-avions, on comprend que le calcul doit être effectué en temps réel avec une grande précision et une cadence élevée de rafraîchissement des informations.

On pourrait utiliser la procédure suivante : un récepteur de positionnement par satellites placé sur la cible envoie sa position par radio au chasseur. Un autre récepteur sur le chasseur calcule sa position et effectue une soustraction entre les deux positions calculées pour déterminer les composantes d'un vecteur reliant le mobile à la cible. Le pilote du mobile utilise ces composantes comme aide pour se diriger vers la cible. Un tel procédé est connu par exemple du brevet EP-A-0 660 191.

Cette solution n'est pas satisfaisante du fait des incertitudes qui affectent les informations de position calculées par les récepteurs. On rappelle que les positions sont calculées avec une certitude liée aux fluctuations d'horloge des signaux émis par les satellites.

L'invention propose une solution pour faciliter au moindre coût une navigation relative d'un chasseur vers une cible, cette solution permettant notamment de fournir une cadence rapide des informations de navigation relative les plus exactes possibles avec des moyens limités en puissance de calculateur nécessaire.

L'invention repose sur l'envoi par la cible vers le chasseur de mesures brutes de pseudo-distances entre le récepteur de la cible et chacun des satellites que ce récepteur peut utiliser valablement, avec l'identification des satellites. Le récepteur de la cible n'envoie pas de résultat de calcul de sa propre position dans un repère terrestre. Le chasseur fait ses propres mesures de pseudo-distances traite alors directement par le calcul des différences de pseudo-distances pour calculer les composantes d'un vecteur de position relative reliant le chasseur à la cible dans un repère terrestre.

De même, la cible peut envoyer des mesures brutes de pseudo-vitesses relatives entre la cible et chacun des satellites, sans envoyer de résultat de calcul de vitesse dans un repère terrestre. Le chasseur reçoit ces mesures, calcule des différences entre ses propres mesures de pseudo-vitesses et celles qu'il reçoit de la cible et effectue directement sur ces différences un calcul aboutissant aux composantes d'un vecteur de vitesse relative entre le mobile et la cible dans un repère terrestre.

Le repère terrestre sera en pratique le repère géographique local à trois axes : axe des longitudes, axe des latitudes, et axe des altitudes.

Les calculs de position et vitesse relative seront faits dans ce repère local, mais l'affichage des informations de navigation relative pourra être fait, après changement de coordonnées, dans un repère lié à la cible, à condition que la cible transmette son attitude au chasseur.

Plus précisément, l'invention propose un procédé d'aide au pilotage d'un chasseur vers une cible, utilisant un premier récepteur de positionnement par satellites associé à la cible pour fournir des mesures de position et de vitesse liées à la position et à la vitesse de la cible, un deuxième récepteur de positionnement par satellites associé au chasseur pour fournir des mesures de position et de vitesse liées à la position et à la vitesse du chasseur, et utilisant des moyens de transmission radio pour émettre des informations de la cible vers le chasseur, ce procédé étant caractérisé en ce que la cible émet périodiquement vers le chasseur des mesures de pseudo-distances représentant la distance de la cible à n satellites différents à un instant donné, l'identification de ces n satellites, une valeur de l'instant de la mesure, des mesures de pseudo-vitesses relatives entre la cible et chaque satellite, en ce qu'on effectue périodiquement avec le deuxième récepteur des mesures de pseudo-distances, pseudo-vitesses et instant de mesure, on détermine dans le chasseur les p satellites utilisés à la fois par le chasseur et par la cible, on soustrait, pour chacun des p satellites, les pseudo-distances et pseudo-vitesses déterminées par le chasseur et celles reçues de la cible, et on calcule directement à partir des résultats de ces soustractions des vecteurs de position et vitesse relative dans un repère terrestre entre le chasseur et un point lié à la cible.

L'invention concerne également un système d'aide au pilotage d'un chasseur vers une cible, comprenant, dans le chasseur, un récepteur de positionnement par satellites et des moyens de réception radio pour recevoir de la cible d'une part des mesures de pseudo-distances et de pseudo-vitesses liées à la position de la cible par rapport à n satellites et d'autre part l'identification de ces n satellites, ce système étant caractérisé en ce qu'il comporte dans le chasseur des moyens pour calculer à partir du récepteur de positionnement par satellites des pseudo-distances et pseudo-vitesses du chasseur par rapport à plusieurs satellites, des moyens pour déterminer les satellites utilisés à la fois par la cible et par le chasseur, des moyens pour soustraire, satellite par satellite, les mesures de pseudo-distances du chasseur et de la cible et les mesures de pseudo-vitesses du chasseur et de la cible, et des moyens pour calculer directement à partir des résultats de ces soustractions, des vecteurs de position et vitesse relative dans un repère terrestre entre le chasseur et un point lié à la cible.

Dans le cas où la cible émet en outre vers le chasseur des informations sur son attitude, le système embarqué dans le chasseur peut comprendre en outre des moyens pour changer les coordonnées des vecteurs de position et vitesse relative et pour fournir des indications de position et vitesse relatives dans un repère lié à la cible.

D'autres caractéristiques et avantages de l'invention apparaîtrons à la lecture de la description détaillée qui suit et qui est faite en référence aux dessins annexés dans lesquels :

- la figure 1 représente la structure générale d'un récepteur GPS;
- la figure 2 représente un exemple de contexte d'application de l'invention;
- la figure 3 représente un exemple de trame d'informations transmises selon l'invention de la cible vers le chasseur.

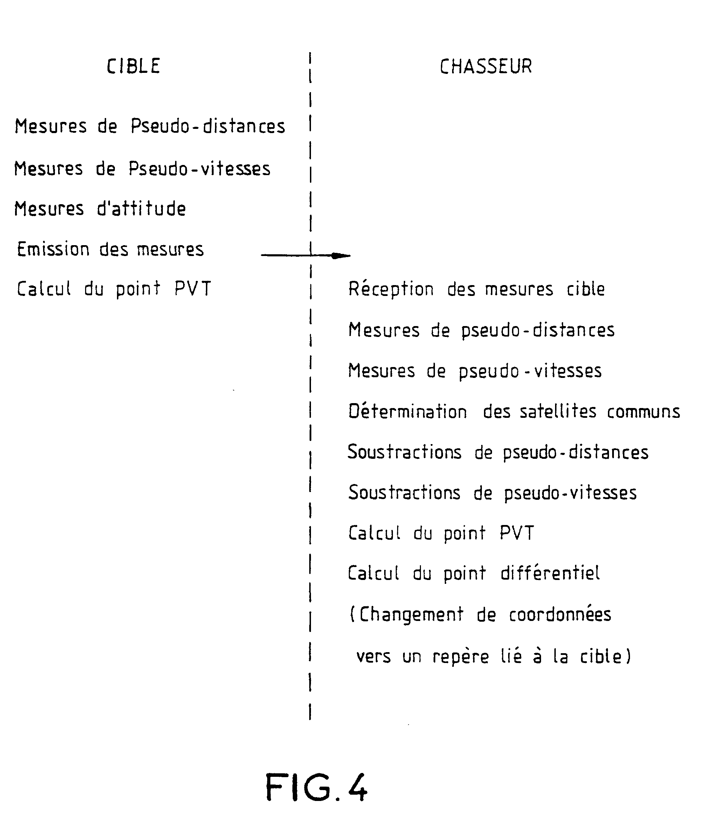

- la figure 4 représente un organigramme général d'opérations effectuées selon l'invention.

L'invention sera décrite plus précisément dans le cas de l'appontage d'un aéronef sur un navire, qui est une opération particulièrement difficile pour le pilote de l'aéronef du fait de la petite dimension de la cible, de l'absence de connaissance absolue de sa position exacte dans un repère terrestre, et du fait de ses mouvements qui peuvent être dus à son avance propre ou à l'action de la mer (houle, vent).

Le pilote a particulièrement besoin d'une assistance au pilotage pour se diriger vers la cible. Cette assistance est nécessaire au moment de l'appontage, mais aussi éventuellement lorsque l'aéronef est éloigné et recherche le navire dans des conditions d'absence de visibilité.

L'invention propose d'utiliser d'une manière particulière des récepteurs de positionnement par satellite, et on va donc d'abord rappeler les principes de fonctionnement de ces récepteurs dans le cas du système GPS (Global Positionning System) qui est le plus répandu.

Le système GPS utilise une constellation de satellites qui tournent autour de la terre sur des orbites très précisément déterminées, c'est-à-dire qu'on peut connaître à tout instant la position d'un satellite quelconque. Les satellites émettent des signaux radiofréquence contenant des données de navigation et des codes qui permettent d'identifier chaque satellite. Ces codes modulent en phase une fréquence porteuse. Un récepteur GPS, au sol ou sur un véhicule terrestre, aérien ou maritime, peut recevoir les signaux de plusieurs satellites simultanément, calculer précisément sa distance à chacun des satellites, ou pseudo-distance, et en déduire sa position précise en latitude, longitude, et altitude, dans un repère terrestre. Il peut en déduire aussi la date et l'heure précise de la réception dans le repère temporel du système GPS. Il peut enfin en déduire, par des mesures Doppler, son propre vecteur vitesse dans le repère terrestre.

Dans le système GPS, chaque satellite est identifié par un code pseudo-aléatoire qui lui est propre et qui module de manière répétitive (toutes les millisecondes par exemple) une fréquence porteuse émise par le satellite. Il existe des systèmes voisins du GPS, notamment le système GLONASS, dans lequel ce code pseudo-aléatoire existe également bien qu'il ne serve pas à identifier un satellite individuel.

Le code pseudo-aléatoire est un code long (1023 bits à 1,023 MHz, soit 1 milliseconde), et une de ses fonctions principales est de permettre l'extraction du signal du satellite dans un niveau de bruit beaucoup plus élevé (30 dB par exemple) que le niveau du signal. Cette technique est maintenant bien connue sous le nom d'émission à étalement de spectre. Le signal est extrait du bruit grâce à une opération de corrélation, dans le récepteur, entre le signal reçu et un code pseudo-aléatoire périodique qui est identique à celui que l'on s'attend à trouver dans le signal. Si les codes ne coïncident pas temporellement, il n'y a aucune corrélation entre les signaux reçus et le code local engendré par un générateur de code local; s'ils coïncident presque, il y a une certaine corrélation, l'énergie de corrélation étant d'autant plus forte que la coïncidence est plus exacte. On peut donc établir un signal de corrélation permettant d'asservir un générateur de code local jusqu'à obtenir une coïncidence exacte du code local et du code modulant le signal émis par le satellite. Une boucle d'asservissement de code permet ensuite de maintenir cette coïncidence.

Le code pseudo-aléatoire est émis par le satellite à des instants extrêmement précis et connus au niveau du récepteur. On se sert de l'opération de corrélation pour déterminer l'instant d'arrivée de ce code dans le récepteur : on détermine l'instant caractéristique ou époque d'émission du code local, et comme ce code local coïncide avec le code reçu lorsque la corrélation maximale est établie, cet instant représente l'instant d'arrivée du code reçu. La différence entre un instant d'émission du code par le satellite et un instant de réception du code par le récepteur permet de déterminer un temps de parcours des signaux entre le satellite et le récepteur. Sachant que la vitesse de parcours des signaux est la vitesse de la lumière, on peut calculer la pseudo-distance, c'est-à-dire la distance entre le récepteur et un satellite donné. La même opération faite sur deux autres satellites permet, par triangulation, de déterminer la position exacte du récepteur par rapport aux trois satellites si on connaît la position de ces satellites.

En utilisant un quatrième satellite, on élimine les erreurs d'horloge du récepteur, l'horloge du récepteur n'étant pas aussi précise que celle des satellites. Outre la position du récepteur, on peut alors calculer un temps précis de la mesure de position, dans le repère de temps des satellites GPS.

La position de chacun des satellites est connue à tout instant : elle est calculée à partir de tables stockées dans le récepteur et remises à jour par le message de navigation diffusé par les satellites. La vitesse des satellites à tout instant est également calculable à partir de ces tables.

On peut déduire, à partir des signaux envoyés par quatre satellites, le temps et la distance du récepteur par rapport aux quatre satellites. Et, par changement de coordonnées, on obtient la position du récepteur dans un repère terrestre fixe.

De même, la vitesse du récepteur est calculée à partir d'une mesure d'effet Doppler sur la fréquence porteuse du signal radiofréquence envoyé par les satellites. On peut donc calculer les pseudo-vitesses, c'est-à-dire les vitesses relatives du récepteur par rapport à chacun des satellites, selon l'axe directeur qui relie ce satellite au récepteur. Quatre satellites sont nécessaires pour éliminer l'ambiguïté sur le temps. On obtient quatre vecteurs de vitesse relative différents, sur les axes directeurs reliant le récepteur aux quatre satellites. Des calculs simples permettent de déterminer la vitesse du récepteur selon trois axes dans le repère terrestre à partir de ces quatre vecteurs vitesse et des informations suivantes :

- les directions des axes directeurs récepteur-satellite par rapport à un repère terrestre fixe (longitude, latitude, altitude); ces directions sont obtenues elles-mêmes par la connaissance de la position du récepteur à un instant donné et la position de chaque satellite à ce même instant;
- les vitesses individuelles des satellites dans le repère terrestre à cet instant.

Si on utilise plus de quatre satellites, on obtient une information redondante. C'est le cas pour les récepteurs de qualité professionnelle utilisés notamment dans l'aéronautique. Cette information redondante permet d'éliminer des satellites qui fourniraient une information défectueuse. L'information est considérée comme défectueuse du fait qu'elle n'est pas cohérente avec l'ensemble des mesures effectuées.

Avec plus de quatre satellites, les calculs de position sont plus compliqués et font en général intervenir une approximation par la méthode des moindres carrés pour trouver le point qui correspond le mieux possible à l'ensemble des mesures obtenues des différents satellites.

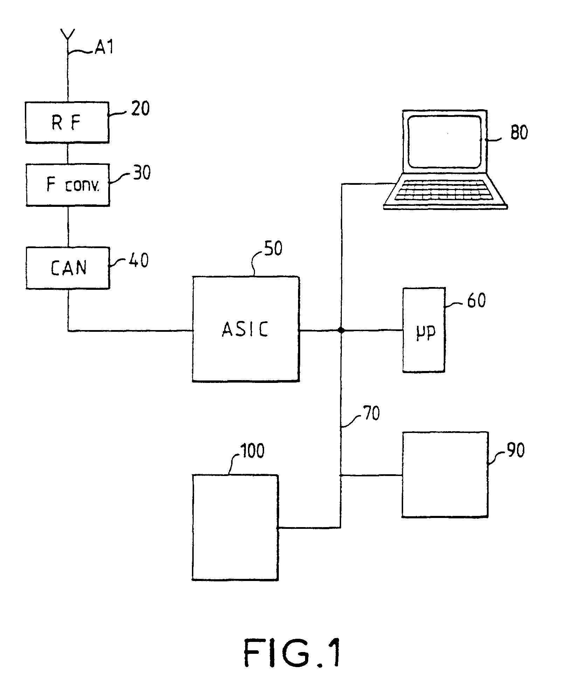

La figure 1 rappelle sommairement le principe général d'un récepteur GPS. Le récepteur comporte une partie radiofréquence, comprenant une antenne A1, un amplificateur radiofréquence 20 et divers circuits de filtrage associés, des circuits de conversion de fréquence 30, et un convertisseur analogique-numérique 40. Le convertisseur permet de fournir des signaux numériques à relativement basse fréquence destinés à être traités dans un circuit de traitement de signal numérique 50. Ce circuit est contrôlé par un microprocesseur 60 et des logiciels de calcul et de contrôle associés.

Le microprocesseur 60 a deux fonctions :

- d'une part, il élabore des données numériques utilisées par le circuit de traitement de signal numérique 50, à partir de données numériques fournies par ce circuit; en particulier, il effectue des calculs numériques nécessaires aux boucles d'asservissement numérique présentes dans le circuit de traitement numérique 50;
- et d'autre part il fournit des résultats définitifs de calcul de position, de temps, et de vitesse à l'utilisateur, c'est-à-dire soit sur un écran d'affichage numérique soit sur un bus numérique vers d'autres appareils qui ont besoin des résultats.

On pourrait évidemment avoir deux processeurs séparés pour effectuer ces deux fonctions. Dans la réalisation avec un seul microprocesseur 60, on a représenté un bus d'échanges 70 entre le microprocesseur 60, le circuit de traitement 50, un périphérique d'entrée/sortie 80, les mémoires de travail 90, et les mémoires de programmes 100 qui contiennent les programmes nécessaires au fonctionnement du microprocesseur.

Très sommairement, le circuit de traitement de signal numérique comporte soit un seul canal de traitement, les informations issues des divers satellites étant traitées de manière multiplexée, soit de préférence plusieurs canaux travaillant en parallèle chacun sur un satellite déterminé.

Chaque canal comporte une double boucle d'asservissement : asservissement de phase de porteuse et asservissement de phase de code.

La boucle de phase de porteuse utilise essentiellement un oscillateur local à contrôle numérique de phase, fournissant une phase numérique périodique (en dent de scie) à une fréquence correspondant à la fréquence de porteuse transposée, en tenant compte de l'effet doppler qui affecte la fréquence de porteuse transmise par un satellite. L'effet doppler est pris en compte du fait même de l'existence des boucles d'asservissement. Le microprocesseur 60 calcule un signal d'erreur de phase de porteuse; ce signal sert à commander l'oscillateur local pour asservir une fréquence porteuse locale sur la fréquence porteuse reçue du satellite.

La boucle d'asservissement de phase de code comporte un générateur de code local, piloté par un oscillateur à contrôle numérique de phase. Elle permet d'asservir les codes locaux sur le code reçu du satellite et de pouvoir ensuite déterminer la position temporelle exacte des codes locaux ainsi asservis. Le code local est corrélé avec le code reçu du satellite; le signal de corrélation est calculé par le microprocesseur et sert à asservir la boucle pour amener le code local en synchronisme avec le code reçu du satellite.

Les deux boucles d'asservissement, de code et de porteuse prennent en compte le décalage de fréquence doppler sur la fréquence porteuse et sur le code, résultant du déplacement relatif de l'avion et du satellite détecté. Ce décalage doppler est mesurable dans les boucles.

Les calculs de temps et de position GPS sont effectués à partir de l'état des boucles d'asservissement à un instant de mesure déterminé. A cet instant, on lit l'état exact de la phase des deux oscillateurs à contrôle numérique de phase.

Les boucles d'asservissement prévues dans le récepteur agissent pour caler une fréquence locale sur la fréquence porteuse reçue des satellites. Le décalage entre cette fréquence locale et la fréquence stable et connue émise par les satellites donne une indication de décalage doppler donc de différence entre la vitesse du satellite et la vitesse du récepteur selon l'axe reliant le satellite au récepteur.

Par conséquent, à partir de mesures effectuées sur le code pseudo-aléatoire, on calcule une position dite "position résolue", dans le repère terrestre; et, à partir de mesures effectuées sur les fréquence de porteuse, on calcule une vitesse dans le repère terrestre.

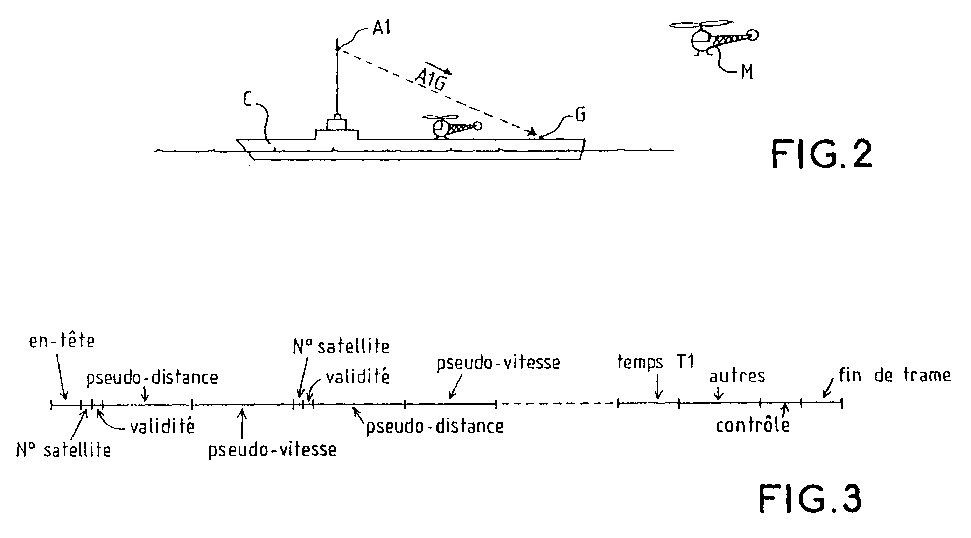

La figure 2 représente le contexte de l'application envisagée ici : un porte-avions ou un porte-hélicoptères constitue une cible C à atteindre par un mobile ou "chasseur" M qui est un avion ou un hélicoptère devant apponter. A la cible sont associés un premier récepteur GPS et des moyens de transmission radio. Ce récepteur permet de définir la position absolue de la cible dans le repère terrestre (avec la précision qu'autorise le système GPS, c'est-à-dire avec une précision qui peut être faible : on rappelle à ce sujet que la précision est volontairement dégradée par fluctuation des horloges des satellites).

Le récepteur GPS de la cible permet de calculer sa propre position, et il permet indirectement aussi de calculer la position d'un point idéal d'appontage G séparé de la position de l'antenne GPS par un vecteur A1G qu'on peut appeler "bras de levier". La position absolue du point G dépend du vecteur fixe et connu A1G, et de l'attitude du navire en cap, roulis et tangage. Ces trois derniers paramètres sont connus dans le navire par divers instruments de bord (ils pourraient être connus par mesures différentielles entre deux récepteurs GPS sur le navire).

On notera que dans ce type d'application, même si le récepteur associé à la cible était placé au point G, ce qui poserait de toutes façons des difficultés pratiques, l'aéronef aurait en général besoin de connaître le cap du navire pour apponter en venant par l'arrière ou en tous cas dans une direction bien déterminée. Cette information devra être transmise par radio à l'aéronef, et de ce fait il n'est pas gênant de transmettre aussi des informations sur le bras de levier A1G qui sépare l'antenne du point visé. On placera donc l'antenne à l'emplacement le meilleur pour son fonctionnement propre, et ce sera en général sur un mât du navire, qui peut se situer à plusieurs dizaines de mètres du point visé G.

L'aéronef comporte son propre récepteur GPS et des moyens de réception de radio pour recevoir les informations envoyées par la cible.

Mais au lieu que la cible envoie sa position calculée par le récepteur GPS dans un repère terrestre, on prévoit selon l'invention qu'elle n'envoie que des mesures brutes de distances par rapport aux satellites (appelées aussi pseudo-distances), avec l'identification des satellites qu'elle utilise.

Et on prévoit que l'aéronef utilise ces mesures brutes de pseudo-distances, les soustrait de ses propres mesures brutes de pseudo-distances pour les satellites correspondants, et effectue directement un calcul de position relative de l'aéronef par rapport à la cible en utilisant les mêmes équations de résolution de position qui servent normalement à calculer une position absolue dans le repère terrestre.

Ce traitement sera donc fait dans le récepteur GPS de l'aéronef, qui sera légèrement modifié pour être capable de donner cette position relative en utilisant les mêmes moyens de calcul qu'il possède déjà pour calculer sa position absolue.

Le supplément de puissance de calcul nécessaire à l'obtention de la position relative est alors extrêmement limité de sorte que les mesures de position relatives peuvent être fournies à haute cadence, par exemple 10 Hertz, ce qui est souhaitable pour les applications du genre de celles envisagées ici.

De la même manière, la cible transmet ses mesures brutes de pseudo-vitesses (vitesse radiale relative entre le récepteur et un satellite selon l'axe directeur reliant le récepteur à ce satellite). Le récepteur radio de l'aéronef reçoit ces informations, les transmet au récepteur GPS qui les soustrait de ses propres mesures de pseudo-vitesses, et qui calcule directement dans le repère terrestre un vecteur vitesse relative entre mobile et cible.

La figure 3 montre un exemple de trame de transmission d'information radio de la cible vers l'aéronef.

La trame comporte par exemple successivement, entre un en-tête de début de trame et une fin de trame, le découpage d'informations suivantes :

- successivement pour chacun des n canaux du récepteur de la cible (j = 1 à n) :

   - N° du satellite (5 bits) de rang j ;
   - information de validité du satellite (1 bit) ;
   - pseudo-distance mesurée vers ce satellite (24 bits) ;
   - pseudo-vitesse mesurée par rapport à ce satellite (20 bits) ;

- puis le temps dT1 de la mesure, commun aux n satellites pour une mesure donnée (25 bits) ;
- une plage d'informations annexes dont la nature peut varier d'une trame à la suivante du fait que ces informations varient peu; par exemple, les informations sur le vecteur A1G, ainsi que sur le cap, le roulis, le tangage peuvent être transmises par morceaux, étalées sur plusieurs trames dans cette plage d'informations ;
- des bits de contrôle d'intégrité de l'information transmise.

Si la fréquence de trame est de 10 Hertz, le débit d'informations transmises peut être de l'ordre de 6000 bits/seconde.

Le récepteur radio de l'aéronef vérifie l'intégrité du message transmis et transmet toutes ces informations au récepteur GPS de l'aéronef qui effectue les opérations suivantes :

- stockage des informations intègres reçues de la cible, une nouvelle trame écrasant les informations de la trame précédente (sauf bien sûr les informations annexes qui nécessitent plusieurs trames pour être transmises complètement );
- mesures propres de pseudo-distances Pdmi et de pseudo-vitesses Pvmi de l'aéronef à un instant T2 pour m satellites (i = 1 à m) ;
- détermination des satellites communs à la cible et à l'aéronef;
- résolution du point pour déterminer la position absolue de l'aéronef et le temps T2, cette résolution étant faite de préférence en n'utilisant que les satellites communs ;
- mise à jour, par extrapolation, des mesures de la cible faites à un instant T1 (envoyé dans le message), pour recaler les mesures de la cible sur l'instant T2; connaissant la pseudo-vitesse Pvci de la cible par rapport au satellite i, la pseudo-distance Pdi à l'instant T2 est corrigée par rapport à l'instant T1 de la valeur (T2-T1 )Pvci;
- soustraction de mesures de pseudo-distances de la cible et de l'aéronef, recalées sur l'instant T2, et soustraction de mesures de pseudo-vitesses. Ces soustractions ne sont effectuées que pour les satellites communs utilisés par la cible au temps T1 et par l'aéronef au temps T2. Les satellites non valables pour l'un ou l'autre des récepteurs sont exclus;
- calcul direct d'une position relative et d'une vitesse relative dans un repère terrestre, en utilisant comme données d'entrée les résultats des soustractions, et comme équations de résolution les mêmes équations qui servent à calculer le point PVT (position, vitesse, temps) dans le récepteur de l'aéronef; au cours de ce calcul, on utilise des valeurs intermédiaires qui ont été calculées pour la résolution du point de l'aéronef de sorte que ces valeurs intermédiaires (qui changent à chaque nouvelle mesure) servent aussi bien pour le calcul de position et vitesse absolue que pour le calcul de position et vitesse relative;
- correction éventuelle pour donner une position relative par rapport au point visé G plutôt que par rapport au point A1;
- changement de coordonnées éventuel pour donner une position relative par rapport à un repère lié à la cible (par rapport à l'axe longitudinal du navire notamment) plutôt que par rapport à un repère terrestre fixe ;
- affichage pour le pilote du résultat sous une forme appropriée pour une aide au pilotage (informations écrites ou réticule de guidage, etc.)

Les mesures brutes de pseudo-distances et de pseudo-vitesses de l'aéronef et de la cible sont celles qui sont élaborées par un récepteur GPS standard. On comprendra que si les récepteurs utilisés sont des récepteurs sophistiqués qui comportent par exemple des circuits de lissage de code par la porteuse, les mesures brutes de pseudo-distances sont des mesures lissées et ce sont celles-là qui sont transmises par radio. Le lissage de code par la porteuse est une disposition classique consistant à fournir comme mesure de pseudo-distance une intégrale de la pseudo-vitesse corrigée par les mesures réelles de pseudo-distances (correction proportionnelle ou proportionnelle et intégrale). Dans tous les cas, on transmet des mesures de pseudo-distance et de pseudo-vitesse selon chaque axe de satellite et non des mesures résolues dans un repère terrestre, sauf en ce qui concerne le temps qui est une mesure résolue mais dont la précision peut être moindre que la précision de position relative cherchée.

Le calcul exécuté pour obtenir une position absolue ou une vitesse absolue dans un repère terrestre est le suivant :

Soit Z le vecteur à p composantes Zj (j = 1 à p) représentant les mesures par rapport aux p satellites communs à la cible et à l'aéronef. Z est un vecteur de p pseudo-distances pour un calcul de position ou un vecteur de p pseudo-vitesses pour un calcul de vitesse. Le principe est le même et on considérera dans ce qui suit qu'on fait un calcul de position.

Soit X le vecteur d'état à 4 composantes (x, y, z, t) représentant la position absolue cherchée (position résolue) ; les trois premières composantes représentent la position proprement dite, par exemple en longitude, latitude, et altitude, et la quatrième composante représente le temps de la mesure.

Le vecteur X est la solution de l'équation

$$Z = H.X \qquad (1)$$

où H est la matrice des nx4 cosinus directeurs, c'est-à-dire une matrice de n lignes de quatre coefficients $C_{jx}$, $C_{jy}$, $C_{jz}$, 1 (j = 1 à p).

Les coefficients $C_{jx}$, $C_{jy}$, $C_{jz}$, représentent les cosinus des angles entre le $j^{ième}$ axe directeur et les axes Ox, Oy, Oz (longitude, latitude, altitude) du repère terrestre (O étant la position du récepteur GPS).

Les erreurs de mesure sur les différents axes de satellites font que l'équation Z = H.X n'admet pas de solution analytique s'il y a plus de quatre satellites, ce qui est le cas général.

On se fixe habituellement un critère supplémentaire pour trouver le vecteur X qui satisfait le mieux possible l'équation Z = H.X. Ce critère est le plus souvent le critère des moindres carrés : on minimise la somme des distances entre le point recherché X, projeté sur les axes directeurs (axes récepteur-satlelite) et la position mesurée ($Z_j$) le long de ces axes.

Dans ce cas, on peut montrer que l'équation Z = H.X admet la solution suivante :

$$X = (H^T.H)^{-1}.H^T.Z \qquad (2)$$

$H^T$ est la transposée de la matrice H.

Cette solution peut être calculée par des opérations de multiplications et inversions de matrice. La partie la plus longue du calcul est alors le calcul de $(H^T.H)^{-1}.H^T$, qui change à chaque nouvelle mesure. Le résultat de calcul, effectué par le récepteur GPS du chasseur pour fournir le point PVT absolu, est immédiatement réutilisé par le récepteur pour effectuer un calcul de position relative $X_r$ à partir de la même formule (2), utilisant le résultat $(H^T.H)^{-1}.H^T$ qui vient d'être calculé, et utilisant comme données d'entrée non pas le vecteur Z mais un vecteur $S_r$ de p pseudo-distances (ou pseudo-vitesses) différentielles $S_{rj}$. Ces pseudo-distances ou pseudo-vitesses différentielles $S_{rj}$ sont les résultats de soustractions de pseudo-distances (ou pseudo-vitesses) entre cible et chasseur satellite par satellite.

La position relative recherchée, position du chasseur par rapport à la cible, est alors définie par un vecteur de position relative $X_r$ à quatre dimensions dans le repère terrestre, selon la formule :

$$X_r = (H^T.H)^{-1}.H^T.S_r \qquad (3)$$

Etant donné que le calcul de X n'est pas nécessairement fait par inversion de matrice, et qu'il est souvent fait par des algorithmes d'approximations par itérations, le calcul de $X_r$ peut aussi être fait par itération, selon le même algorithme et avec les mêmes calculs intermédiaires que le calcul de X mais en utilisant comme données d'entrées les résultats $S_{rj}$ au lieu des composantes $Z_j$.

Le calcul itératif consiste en une succession de calculs pour chaque satellite : calcul d'un gain de recalage $K_j$ ; calcul d'une matrice de coefficients intermédiaires $P_j$ servant au calcul de gain de recalage à l'étape suivante et d'une estimation de position $X_j$ à partir de $K_{j-1}$, de $Z_j$ et de l'estimation précédente $X_{j-1}$.

Typiquement, dans cette méthode itérative, le calcul le plus long est le calcul du gain de recalage. Comme ce calcul est nécessairement fait par le récepteur de l'aéronef pour déterminer sa position absolue, on s'en sert selon l'invention pour calculer la position relative de l'aéronef par rapport à la cible : on utilise alors comme vecteur de mesure le vecteur $S_r$ de p résultats $S_{rj}$ de soustractions de pseudo-distances (ou pseudo-vitesses) et on utilise à l'étape j le même gain de recalage $K_j$ pour l'appliquer à ce vecteur $S_r$ plutôt qu'au vecteur Z.

On calcule donc à chaque étape d'itération une estimation de position relative $X_{rj}$ à partir de $K_{j-1}$, $S_{rj}$ et $X_{rj-1}$, pour obtenir finalement, à la dernière étape d'itération le vecteur $X_r$ de position relative de l'aéronef par rapport à la cible , à quatre dimensions dans le repère terrestre.

La puissance de calcul supplémentaire pour l'obtention d'une position relative est très faible. Et cette position est très précise puisqu'elle élimine les erreurs de fluctuation d'horloges des satellites du fait qu'elle effectue les calculs directement à partir de soustractions de pseudo-distances. On peut dire la même chose du calcul de vitesse relative.

Typiquement, le calcul itératif avec gain de recalage peut être effectué par les opérations suivantes :

si on appelle :

$Z_j$ la composante de rang j du vecteur de mesure

$X_j$ l'estimation du vecteur d'état (position ou vitesse) à l'étape j de l'itération,

$P_j$ une matrice de 4x4 coefficients à l'étape j,

$K_j$ un vecteur de gain de recalage 4x1 à l'étape j,

$\sigma_j$ la composante de bruit estimé pour la mesure sur l'axe j,

H la matrice nx4 des cosinus directeurs des n satellites, $(H)^{<j>}$ la $j^{ième}$ ligne de cette matrice, et $(H)^{<j>T}$ la transposée de cette $j^{ième}$ ligne,

la formule d'itération est la suivante :

$$K_j = P_{j-1}.(H)^{<j>T}.[(\sigma_j)^2 + (H)^{<j>}.P_{j-1}.(H)^{<j>T}]^{-1}$$

$$P_j = P_{j-1} - K_j.(H)^{<j>}.P_{j-1}$$

$$X_j = X_{j-1} + K_j.[Z_j - (H)^{<j>}.X_{j-1}]$$

Cette méthode comporte donc trois calculs à n'importe quelle étape d'itération de rang j, où j varie de 1 à p (p étant le nombre de satellites utilisés à la fois par le chasseur et par la cible), c'est-à-dire où j représente un axe directeur particulier :

A. calcul d'un gain $K_j$, avec :

$$K_j = P_{j-1}.(H)^{<j>T}.[(\sigma_j^2 + (H)^{<j>}.P_{j-1}.(H)^{<j>T}]^{-1}$$

$P_j$ est une matrice de coefficients calculés à l'étape j; $P_{j-1}$ est donc cette matrice à l'étape précédente.

$\sigma_j^2$ est une composante de bruit estimé pour la mesure sur l'axe j. Ce bruit est une donnée connue a priori, ou estimée a priori, résultant principalement

- de l'erreur de "disponibilité sélective" (en anglais "selective availability" SA) qui est une imprécision d'horloge affectant les satellites, imprécision dont l'amplitude est donnée par les satellites eux-mêmes dans le message de navigation,
- des erreurs de propagation atmosphériques,
- du bruit de corrélation, estimé dans le récepteur par un filtre qui fournit directement ce bruit.

La matrice $P_0$ est initialement une matrice diagonale avec des coefficients élevés (par exemple $10^5$).

B. calcul de la matrice $P_j$ avec :

$$P_j = P_{j-1} - K_j.(H)^{<j>}.P_{j-1}$$

C. calcul d'une estimation de position $X_j$, avec :

$$X_j = X_{j-1} + K_{j-1}.[Z_j - (H)^{<j>}.X_{j-1}]$$

où $X_j$ est le vecteur d'état en quatre dimensions, estimé à l'étape j de l'itération, et $Z_j$ est la composante de rang j du vecteur de mesure de position, c'est-à-dire la mesure sur l'axe directeur j.

Selon l'invention, on propose donc de calculer des estimations successives $X_{rj}$ par les mêmes formules, en remplaçant $X_j$ par $X_{rj}$ et $Z_j$ par $S_{rj}$, et en réutilisant les calculs intermédiaires de $P_j$ et $K_j$.

Le vecteur d'état $X_r$ de position ou vitesse relative définit la position du chasseur par rapport au point A1 correspondant à l'antenne du récepteur de la cible. Une translation peut être effectuée pour obtenir la position par rapport au point de référence G, les composantes du vecteur A1G étant transmises de la cible au chasseur en tant qu'informations annexes dans la trame envoyée par radio.

Par ailleurs, dans le cas où le chasseur reçoit par radio de la cible des informations sur l'attitude de celle-ci (cap surtout mais éventuellement aussi roulis et tangage), le chasseur effectue de préférence un changement de coordonnées qui donne sa position relative par rapport au point G dans un repère d'axes fixes par rapport à la cible et non dans un repère terrestre fixe. Ceci est important par exemple pour des opérations d'appontage d'un aéronef sur un navire.

Enfin, lorsque le point G visé est séparé du centre A1 de l'antenne par un vecteur de bras de levier A1G, on peut également envisager que le récepteur placé sur la cible calcule lui-même des corrections de bras de levier appliquées aux mesures de pseudo-distances, afin d'envoyer directement des mesures de pseudo-distances corrigées, c'est-à-dire des mesures centrées sur le point G, au lieu d'envoyer séparément des mesures de pseudo-distances centrées sur le point A1 et des informations d'attitude du bras de levier. Le chasseur utilise directement les mesures corrigées, représentant les pseudo-distances entre le point G et chacun des satellites observés, pour calculer sa position par rapport au point G.

On notera que l'invention est applicable même dans des cas où le point de repère G n'est pas physiquement lié à la cible qui porte l'antenne A1, à condition que le chasseur connaisse (ou reçoive par radio de la cible) les composantes du vecteur A1G définissant le point G exact qu'il faut viser. Par exemple, on peut envisager une application dans laquelle la cible est une balise GPS larguée en un endroit a priori inconnu, fixe ou mobile, mais qui servira de référence de base, et le point visé par un chasseur est un point lié à la cible non pas physiquement mais mathématiquement par un vecteur prédéterminé. Ainsi, dans une application particulière, la balise peut définir un point de ralliement global pour plusieurs mobiles, mais chaque mobile doit atteindre un point précis différent du point de ralliement, de sorte que chaque chasseur vise un point différent. Les différents points visés sont prédéfinis en position relative par rapport à la balise.

## Revendications

1. Procédé d'aide au pilotage d'un chasseur vers une cible, utilisant un premier récepteur de positionnement par satellites associé à la cible pour fournir des mesures de position et de vitesse liées à la position et à la vitesse de la cible, un deuxième récepteur de positionnement par satellites associé au chasseur pour fournir des mesures de position et de vitesse liées à la position et à la vitesse du chasseur, et utilisant des moyens de transmission radio pour émettre des informations de la cible vers le chasseur, procédé dans lequel on effectue périodiquement avec le deuxième récepteur des mesures de pseudo-distances, pseudo-vitesses et instant de mesure, ce procédé étant caractérisé en ce que la cible émet périodiquement vers le chasseur des mesures de pseudo-distances représentant la distance de la cible à n satellites différents à un instant donné, l'identification de ces n satellites, une valeur de l'instant de la mesure, des mesures de pseudo-vitesses relatives entre la cible et chaque satellite, et en ce que on détermine dans le chasseur les p satellites utilisés à la fois par le chasseur et par la cible, on soustrait, pour chacun des p satellites, les pseudo-distances et pseudo-vitesses déterminées par le chasseur et celles reçues de la cible, et on calcule directement à partir des résultats de ces soustractions des vecteurs de position et vitesse relative dans un repère terrestre entre le chasseur et un point visé lié à la ciblé.

2. Procédé selon la revendication 1, caractérisé en ce que le chasseur reçoit de la cible des informations sur les composantes d'un vecteur reliant le point visé et une antenne du récepteur de positionnement de la cible, le récepteur du chasseur effectuant d'abord un calcul de position relative par rapport à l'antenne puis un calcul de position relative par rapport au point visé.

3. Procédé selon l'une des revendications 1 et 2, caractérisé en ce que le chasseur reçoit de la cible des informations sur l'attitude de la cible et calcule une position relative entre le chasseur et le point visé dans un repère fixe par rapport à la cible.

4. Procédé selon l'une des revendications 1 et 2, caractérisé en ce que, le point visé (G) étant séparé par un bras de levier A1G du centre (A1) d'une antenne du récepteur de la cible, le récepteur associé à la cible calcule et transmet au chasseur des mesures de pseudo-distances corrigées qui sont les pseudo-distances entre le point G et chacun de satellites observés.

5. Procédé selon l'une des revendications 1 à 4 caractérisé en ce que le récepteur du chasseur calcule la position absolue du chasseur à un instant donné en effectuant des calculs intermédiaires qui changent à chaque nouvelle mesure de position, et en ce qu'il utilise les résultats de ces calculs intermédiaires pour déterminer directement une position relative par rapport à la cible au même instant de mesure.

6. Système d'aide au pilotage d'un chasseur vers une cible, comprenant, dans le chasseur, un récepteur de positionnement par satellites et des moyens de réception radio pour recevoir de la cible d'une part des mesures de pseudo-distances et de pseudo-vitesses liées à la position de la cible par rapport à n satellites et d'autre part l'identification de ces n satellites et d'un instant de mesure, ce système comportant, dans le chasseur, des moyens pour calculer à partir du récepteur de positionnement par satellites des pseudo-distances et pseudo-vitesses du chasseur par rapport à plusieurs satellites, le système étant caractérisé en ce qu'il comporte des moyens pour déterminer les p satellites utilisés à la fois par la cible et par le chasseur, des moyens pour soustraire, pour chacun des p satellites, des mesures de pseudo-distances du chasseur et de la cible et les mesures de pseudo-vitesses du chasseur et de la cible, et des moyens pour calculer directement à partir des résultats de ces soustractions, des vecteurs de position et vitesse relative dans un repère terrestre entre le chasseur et un point lié à la cible.

## Claims

1. Process for aiding the piloting of a hunter towards a target, using a first satellite-based positioning receiver associated with the target to provide position and velocity measurements tied to the position and to the velocity of the target, a second satellite-based positioning receiver associated with the hunter to provide position and velocity measurements tied to the position and to the velocity of the hunter, and using radio transmission means to transmit information from the target to the hunter, in which process the second receiver is employed to perform periodic measurements of pseudo-distances, pseudo-velocities and measurement instant, this process being characterized in that the target periodically transmits, to the hunter, measurements of pseudo-distances representing the distance of the target from n different satellites at a given instant, the identification of these n satellites, a value of the instant of the measurement, measurements of relative pseudo-velocities between the target and each satellite, and in that the p satellites used both by the hunter and by the target are determined in the hunter, the pseudo-distances and pseudo-velocities determined by the hunter and those received from the target are subtracted for each of the p satellites, and relative position and velocity vectors are calculated directly from the results of these subtractions, in relation to a terrestrial reference marker between the hunter and a sighted point tied to the target.

2. Process according to Claim 1, characterized in that the hunter receives information from the target regarding the components of a vector joining the sighted point and an antenna of the positioning receiver of the target, the receiver of the hunter firstly performing a calculation of relative position with respect to the antenna and then a calculation of relative position with respect to the sighted point.

3. Process according to either of Claims 1 and 2, characterized in that the hunter receives information from the target regarding the attitude of the target and calculates a relative position between the hunter and the sighted point in relation to a reference marker fixed with respect to the target.

4. Process according to either of Claims 1 and 2, characterized in that, the sighted point (G) being separated by a lever arm A1G from the centre (AI) of an antenna of the receiver of the target, the receiver associated with the target calculates and transmits to the hunter measurements of corrected pseudo-distances which are the pseudo-distances between the point G and each of the satellites observed.

5. Process according to one of Claims 1 to 4, characterized in that the receiver of the hunter calculates the absolute position of the hunter at a given instant by performing intermediate calculations which change with each new position measurement, and in that it uses the results of these intermediate calculations to determine directly a relative position with respect to the target at the same measurement instant.

6. System for aiding the piloting of a hunter towards a target, comprising, in the hunter, a satellite-based positioning receiver and radio reception means for receiving from the target on the one hand measurements of pseudo-distances and of pseudo-velocities tied to the position of the target with respect to n satellites and on the other hand the identification of these n satellites, and of a measurement instant, this system comprising, in the hunter, means for calculating, using the satellite-based positioning receiver, pseudo-distances and pseudo-velocities of the hunter with respect to several satellites, the system being characterized in that it comprises means for determining p satellites used both by the target and by the hunter, means for subtracting, for each of the p satellites, measurements of pseudo-distances of the hunter and of the target and the measurements of pseudo-velocities of the hunter and of the target, and means for calculating directly from the results of these subtractions, relative position and velocity vectors in relation to a terrestrial reference marker between the hunter and a point tied to the target.

## Patentansprüche

1. Verfahren zur Unterstützung der Führung eines Verfolgers zu einem Ziel, wobei das Verfahren einen ersten Satellitenpositionierungsempfänger, der dem Ziel zugeordnet ist, um Positions- und Geschwindigkeitsmeßwerte bezüglich der Position und der Geschwindigkeit des Ziels zu liefern, einen zweiten Satellitenpositionierungsempfänger, der dem Verfolger zugeordnet ist, um Positions- und Geschwindigkeitsmeßwerte bezüglich der Position und der Geschwindigkeit des Verfolgers zu liefern, sowie Funksendemittel zum Senden von Informationen vom Verfolger zum Ziel verwendet, wobei in dem Verfahren mit dem zweiten Empfänger periodisch Messungen des Pseudoabstandes, der Pseudogeschwindigkeit und des Meßzeitpunkts ausgeführt werden, wobei das Verfahren dadurch gekennzeichnet ist, daß das Ziel zum Verfolger periodisch Pseudoabstandsmeßwerte, die den Abstand des Ziels von n verschiedenen Satelliten zu einem gegebenen Zeitpunkt repräsentieren, die Kennung dieser n Satelliten, einen Wert des Zeitpunkts der Messung sowie Meßwerte von Pseudorelativgeschwindigkeiten zwischen dem Ziel und jedem Satelliten sendet und daß im Verfolger die p zugleich vom Verfolger und vom Ziel verwendeten Satelliten bestimmt werden, für jeden der p Satelliten die Pseudoabstände und die Pseudogeschwindigkeiten, die vom Verfolger bestimmt werden, und jene, die vom Ziel empfangen werden, subtrahiert werden und anhand der Ergebnisse dieser Subtraktionen direkt Positions- und Relativgeschwindigkeitsvektoren in einem terrestrischen Koordinatensystem zwischen dem Verfolger und einem mit dem Ziel in Verbindung stehenden angestrebten Punkt berechnet werden.

2. Verfahren nach Anspruch 1, dadurch gekennzeichnet, daß der Verfolger vom Ziel Informationen bezüglich der Komponenten eines Vektors empfängt, der den angestrebten Punkt und eine Antenne des Positionierungsempfängers des Ziels verbindet, wobei der Empfänger des Verfolgers zunächst eine Berechnung der relativen Position in bezug auf die Antenne und dann eine Berechnung der relativen Position in bezug auf den angestrebten Punkt ausführt.

3. Verfahren nach einem der Ansprüche 1 und 2, dadurch gekennzeichnet, daß der Verfolger vom Ziel Informationen bezüglich der Lage des Ziels empfängt und eine relative Position zwischen dem Verfolger und dem angestrebten Punkt in einem in bezug auf das Ziel festen Koordinatensystem berechnet.

4. Verfahren nach einem der Ansprüche 1 und 2, dadurch gekennzeichnet, daß, da der angestrebte Punkt (G) vom Zentrum (A1) einer Antenne des Empfängers des Ziels durch einen Hebelarm A1G getrennt ist, der dem Ziel zugeordnete Empfänger korrigierte Pseudoabstandsmeßwerte, die Pseudoabstände zwischen dem Punkt G und jedem der betrachteten Satelliten sind, berechnet und zum Verfolger sendet.

5. Verfahren nach einem der Ansprüche 1 bis 4, dadurch gekennzeichnet, daß der Empfänger des Verfolgers die absolute Position des Verfolgers zu einem gegebenen Zeitpunkt berechnet, indem er Zwischenberechnungen ausführt, die sich bei jeder neuen Messung der Position ändern, und daß es die Ergebnisse dieser Zwischenberechnungen verwendet, um direkt eine relative Position bezüglich des Ziels zum selben Meßzeitpunkt zu bestimmen.

6. System zur Unterstützung der Führung eines Verfolgers zu einem Ziel, das im Verfolger einen Satellitenpositionierungsempfänger und Funkempfangsmittel, die vom Ziel einerseits Pseudoabstands- und Pseudogeschwindigkeitsmeßwerte, die mit der Position des Ziels in bezug auf n Satelliten in Beziehung stehen, und andererseits die Kennung dieser n Satelliten und einen Meßzeitpunkt empfangen, umfaßt, wobei dieses System im Verfolger Mittel enthält, die anhand des Satellitenpositionierungsempfängers Pseudoabstände und Pseudogeschwindigkeiten des Verfolgers in bezug auf mehrere Satelliten berechnen, wobei das System dadurch gekennzeichnet ist, daß es Mittel zum Bestimmen der p Satelliten, die zugleich vom Ziel und vom Verfolger verwendet werden, Mittel, die für jeden der p Satelliten Pseudoabstandsmeßwerte des Verfolgers und des Ziels und Meßwerte der Pseudogeschwindigkeiten des Verfolgers und des Ziels subtrahieren, sowie Mittel, die anhand der Ergebnisse dieser Subtraktionen direkt Positions- und Relativgeschwindigkeitsvektoren in einem terrestrischen Koordinatensystem zwischen dem Verfolger und einem angestrebten Punkt des Ziels berechnen, umfaßt.

FIG.1

EP 0 925 515 B1

FIG.2

FIG.3

| CIBLE | CHASSEUR |
|---|---|

Mesures de Pseudo-distances

Mesures de Pseudo-vitesses

Mesures d'attitude

Emission des mesures ⟶

Calcul du point PVT

Réception des mesures cible

Mesures de pseudo-distances

Mesures de pseudo-vitesses

Détermination des satellites communs

Soustractions de pseudo-distances

Soustractions de pseudo-vitesses

Calcul du point PVT

Calcul du point différentiel

(Changement de coordonnées

 vers un repère lié à la cible)

# FIG.4